# EUROPÄISCHE PATENTSCHRIFT

(11) **EP 2 527 679 B1**
(45) Veröffentlichungstag und Bekanntmachung des Hinweises auf die Patenterteilung: **25.03.2015**
(21) Anmeldenummer: 12003745.2
(22) Anmeldetag: 09.05.2012
(51) Int. Cl.: F16D 48/06, B60W 30/14

(54) **Verfahren zum Betrieb eines längsführenden Fahrerassistenzsystems in einem Kraftfahrzeug und Kraftfahrzeug**
Method for operating a longitudinally guiding driver assistance system in a motor vehicle and motor vehicle
Procédé de fonctionnement d'un système longitudinal d'assistance au conducteur dans un véhicule automobile et véhicule automobile

(30) Priorität: 25.05.2011 DE 102011102332
(43) Veröffentlichungstag der Anmeldung: 28.11.2012
(73) Patentinhaber: Audi AG, 85045 Ingolstadt (DE)
(72) Erfinder: Breu, Alexander, 93495 Weiding (DE); Holzmann, Manfred, 91171 Greding (DE)
(74) Vertreter: Thielmann, Frank

(56) Entgegenhaltungen:
- EP-A2- 1 930 614
- DE-A1-102004 031 833

## Beschreibung

Die Erfindung betrifft ein Verfahren zum Betrieb eines längsführenden Fahrerassistenzsystems, insbesondere eines ACC-Systems, in einem Kraftfahrzeug, welches ein Kupplungspedal als Stellmittel zum manuellen Betätigen einer Kupplung aufweist, wobei das Fahrerassistenzsystem zur Durchführung wenigstens eines Fahreingriffs zur Regelung der Geschwindigkeit des Kraftfahrzeugs ausgebildet ist. Daneben betrifft die Erfindung ein Kraftfahrzeug mit einem solchen längsführenden Fahrerassistenzsystem.

Längsführende Fahrerassistenzsysteme in Kraftfahrzeugen sind im Stand der Technik bereits bekannt. In der einfachsten Ausführung handelt es sich dabei um eine sogenannte Geschwindigkeitsregelanlage (GRA), bei der der Fahrer eine Wunschgeschwindigkeit wählen kann, auf die dann das Fahrerassistenzsystem mittels Brems- oder Beschleunigungseingriffen regelt. Um ein solches längsführendes Fahrerassistenzsystem auch in Folgefahrt einsetzen zu können, wurden sogenannte ACC-Systeme (adaptive cruise control) vorgeschlagen, die zwei Betriebsmodi aufweisen. In einem Freifahrmodus wird dabei wie von der Geschwindigkeitsregelanlage bekannt auf die Wunschgeschwindigkeit geregelt. Liegt jedoch ein voranfahrendes Fahrzeug vor, das langsamer als die Wunschgeschwindigkeit fährt, wird das ACC-System in einem Folgemodus betrieben, wobei auf einen bestimmten Abstand, meist eine Zeitlücke, zu dem voranfahrenden Fahrzeug als Regelobjekt durch Brems- und Beschleunigungseingriffe geregelt wird. Der Regelabstand kann dabei auch durch den Fahrer modifizierbar ausgestaltet werden.

Solche längsführenden Fahrerassistenzsysteme, insbesondere ACC-Systeme, wurden auch bei handgeschalteten Kraftfahrzeugen vorgeschlagen. In handgeschalteten Kraftfahrzeugen bedient der Fahrer die Kupplung des Handschalter-Getriebes manuell über ein Kupplungspedal als Stellmittel.

ACC-Systeme bei Kraftfahrzeugen mit Handschalter-Getrieben setzen voraus, dass eine gültige Vorwärtsgangstufe eingelegt ist und der Antriebsstrang, mithin die Kupplung, vollständig geschlossen ist, also ein eingekuppelter Zustand vorliegt. Anderenfalls wird die ACC-Funktion deaktiviert bzw. ist nicht aktivierbar.

ACC-Systeme oder allgemein längsführende Fahrerassistenzsysteme nutzen häufig, um die Geschwindigkeit des Kraftfahrzeugs zu regeln, auch eine Schubabschaltung für den Motor, um die Schleppmomentverzögerung (Motorbremse) zu nutzen. Sobald der Motor des Kraftfahrzeugs in die Schubabschaltung geht, wird das Kraftfahrzeug mit der dadurch anliegenden Schleppverzögerung verzögert, die abhängig von der Motorvariante und der eingelegten Gangstufe unterschiedlich und sehr deutlich ausgeprägt sein kann.

In bekannten längsführenden, in Kraftfahrzeugen mit Handschalter-Getrieben genutzten Fahrerassistenzsystemen, insbesondere ACC-Systemen, existieren verschiedene Probleme. Eine erste Problemgruppe resultiert daraus, dass gewisse angeforderte Zielbeschleunigungen oder Zielbremsverzögerungen nicht vollständig verfügbar sind. Dies sei anhand eines Beispiels näher erläutert. In einem beispielhaften Kraftfahrzeug beträgt die Schleppmomentverzögerung, falls sich der Motor in der Schubabschaltung befindet, -0,8 m/s². Würde sich das Fahrzeug frei rollend mit geöffneter Kupplung bewegen (Segelbetrieb), würde die sich einstellende Fahrzeugbeschleunigung 0 m/s² betragen. Mit den im Fahrzeugbetrieb stellbaren Momenten würden sich Fahrzeugbeschleunigungen im Bereich >-0,2 m/s² einstellen lassen. Das bedeutet aber, dass es im eingekuppelten Zustand ein relativ großes Beschleunigungsband gibt, das sich nicht oder schwierig regeln lässt.

Die Regelung des längsführenden Fahrerassistenzsystems wirft hierbei häufig das Problem auf, dass zwar eine leichte Verzögerung bzw. ein Dahinrollen des Kraftfahrzeugs realisiert werden soll, aber das Schubabschaltungsmoment seitens des Motors und damit die Schleppmomentverzögerung zu hoch ist, so dass sich das Kraftfahrzeug stärker verlangsamt als es durch das längsführende Fahrerassistenzsystem eigentlich gewünscht wird. Die Folge hieraus ist, dass das Fahrerassistenzsystem somit gezwungen ist, eine Momentenanforderung an den Motor zu senden, so dass die Schubabschaltung beendet wird, da die Geschwindigkeit weniger stark reduziert werden soll. Nachteilhafterweise treten hierdurch Nebeneffekte auf, die einen negativen Einfluss auf den Komfort haben. Umschaltungen in den Antrieb sind meist spürbar und führen zu einem "ruckeligen" Gesamteffekt. Zudem sind Motorvarianten bekannt, bei denen kleine Momentenanforderungen nicht exakt gestellt werden können. Dann kann der beschriebene "Ruckeleffekt" sehr stark ausgeprägt sein und zu Schwingungen führen, da die Motoren meist zu hohe Momente stellen, was in der Folge durch einen unerwünscht zu hohen Geschwindigkeitszuwachs dazu führen kann, dass die Regelfunktion des längsführenden Fahrerassistenzsystems im Anschluss an die Momentenumsetzung wieder hart die Momentenanforderung reduzieren oder im Extremfall sogar kurz die Bremse ansteuern muss. Dies kann dann gegebenenfalls auch zu Bremslichtflackern führen. Wechselt der Betriebsmodus des Motors zu schnell in die Schubabschaltung oder aus der Schubabschaltung heraus, ist dies ebenfalls Komfort beeinträchtigend für die Funktion des längsführenden Fahrerassistenzsystems, da die Einflüsse direkt über den Antriebsstrang auf das Kraftfahrzeug rückgekoppelt werden.

Um diese Komfortprobleme zu beseitigen, wurde vorgeschlagen, innerhalb der Regelfunktion des längsführenden Fahrerassistenzsystems definierte Hysteresen für die Ansteuerung von Motor und Bremse zu verwenden, was den Nachteil birgt, dass in diesen Situationen die Wunschgeschwindigkeit nicht sauber eingeregelt wird, oder analog der Wunschabstand bzw. Regelabstand nicht genau eingehalten werden kann.

Ein weiterer Nachteil bei heutigen längsführenden Fahrerassistenzsystemen, die in Kraftfahrzeugen mit Handschalter-Getrieben eingesetzt werden, ist es, dass verbrauchsoptimierende Maßnahmen üblicherweise nicht durchgeführt werden können, beispielsweise die Verwendung eines Segelbetriebs oder dergleichen. Um das längsführende Fahrerassistenzsystem betreiben zu können, muss eine gültige Vorwärtsgangstufe eingelegt sein und der Antriebsstrang muss vollständig geschlossen sein, das bedeutet die Kupplung muss geschlossen sein. Eine verbrauchsoptimierte Fahrstrategie des Fahrerassistenzsystems, bei der das Fahrzeug mit abgekoppeltem Antriebsstrang frei rollt bzw. mit Schlupf an der Kupplung fährt, ist nicht möglich.

EP 1 930 614 A2 betrifft eine Vorrichtung zur Betätigung einer Kupplung in einem Kraftfahrzeug. Dort geht es um die Problematik, dass der Fahrer weiterhin die Kupplung im herkömmlicher Weise betätigen können soll, jedoch eine komfortablere und situationsgerechtere Bedienung ermöglicht wird. Hierzu wird ein Stellantrieb vorgesehen, der auf ein Signal eines Treibers die Kupplung öffnet, und dass eine Arretiereinrichtung vorgesehen ist, die die Kupplung in der geöffneten Stellung hält und die durch einen Schließbefehl deaktivierbar ist. Wird das Fahrzeug mit Hilfe eines ACC-Systems mit Stopand-Go-Funktion automatisch in den Stand gebremst, kann durch ein Signal des Treibers die Kupplung automatisch geöffnet werden, so dass der Fahrer nicht tätig zu werden braucht und dementsprechend auch keine Aufforderung zur Betätigung der Kupplung zu erhalten braucht.

Der Erfindung liegt daher die Aufgabe zugrunde, in Kraftfahrzeugen mit Handschalter-Getrieben genutzte längsführende Fahrerassistenzsysteme im Hinblick auf den Komfort und den Energieverbrauch zu verbessern.

Zur Lösung dieser Aufgabe ist erfindungsgemäß ein Verfahren mit den Merkmalen des Anspruchs 1 vorgesehen.

Erfindungsgemäß wird also ein Kraftfahrzeug verwendet, das ein grundsätzlich manuell zu schaltendes Getriebe mit einem Kupplungspedal zur Betätigung der Kupplung umfasst, welches mithin als ein Stellmittel wirkt. Dabei kann insbesondere durch das Kupplungspedal ein rein mechanisches Öffnen und Schließen der Kupplung, beispielsweise über einen Seilzug, realisiert werden. Unabhängig hiervon ist ein weiteres Stellmittel, nämlich der Kupplungsaktuator, vorgesehen, der die Kupplung, ohne dass das Kupplungspedal betätigt werden muss, automatisch öffnen und schließen kann. Der Kupplungsaktuator kann beispielsweise als ein Stellmotor realisiert sein und bevorzugt unmittelbar an der Kupplung, beispielsweise also unmittelbar an einer Kupplungsscheibe, angreifen. Beide Stellmittel greifen dann also letztlich parallel auf die Kupplung zu, so dass sie grundsätzlich unabhängig sind, zumindest in Bezug auf das Öffnen der Kupplung. Denn selbst dann, wenn der Kupplungsaktuator die Kupplung geschlossen hat, kann jederzeit vom Fahrer die Kupplung über das Kupplungspedal geöffnet werden. Der Fahrer behält also die grundsätzliche Bedienhoheit über die Kupplung, so dass es sich weiterhin um ein Handschalter-Getriebe handelt, welches jedoch in Bezug auf ein längsführendes Fahrerassistenzsystem vorteilhafte weitere Möglichkeiten bietet.

So ist erfindungsgemäß vorgesehen, dass nicht nur eine Beschleunigungsanforderung (die als negative Beschleunigungswerte auch eine Verzögerungsanforderung umfasst) als Ausgabegröße der Regelfunktion des längsführenden Fahrerassistenzsystems ermittelt wird, sondern zusätzlich bei der Regelung der Geschwindigkeit auch ein gewünschter Kupplungsschlupf ermittelt wird. Der Kupplungsaktuator wird dann entsprechend dieses Kupplungsschlupfes angesteuert. Die Erfindung sieht also zusammenfassend vor, dass das längsführende Fahrerassistenzsystem für seine Fahrstrategien auch einen Kupplungsaktuator einbinden kann. Über diesen Kupplungsaktuator kann das längsführende Fahrerassistenzsystem einen gewünschten Kupplungsschlupf und somit eine geregelte Kraftübertragung über den Antriebsstrang anfordern. Zweckmäßigerweise ist aber ein Kupplungsschlupf von 0 - 100% anforderbar, wobei ein Kupplungsschlupf von 0% einer geschlossenen Kupplung, ein Kupplungsschlupf von 100% einer geöffneten Kupplung entspricht.

Dadurch wird dem Fahrerassistenzsystem ein weiterer Freiheitsgrad zugänglich gemacht, der es zunächst grundsätzlich erlaubt, die Längsregelung besser darzustellen, nachdem neben dem üblichen Betriebsmodus - Kupplung geschlossen - nun weitere Betriebsmodi zur Verfügung stehen, um die tatsächlich gewünschten Anforderungen zu realisieren. Insbesondere wird das bislang nicht oder nur schwierig regelbare Beschleunigungsband zugänglich, nachdem diese Zustände mit schleifender Kupplung bzw. offener Kupplung hergestellt werden können. Auf diese Weise lässt sich der Fahrkomfort deutlich verbessern; zudem wird es auch möglich, verbrauchsoptimierte Fahrstrategien anzuwenden, die beispielsweise im Segelbetrieb arbeiten. Insgesamt wird es möglich, Motor und Bremse weniger häufig im Betrieb anzusteuern.

Zusammenfassend lässt sich also sagen, dass es möglich ist, den Kupplungsschlupf in Abhängigkeit von wenigstens einem auf die Reduzierung des Energieverbrauchs des Kraftfahrzeugs und/oder die Komforterhöhung für den Fahrer abzielenden Kriterium zu ermitteln, insbesondere im Rahmen einer Optimierung. Je nach der aktuellen Beschleunigungsanforderung und dem Antriebsstrangzustand sowie der Fahrsituation, die über die fahrdynamische Gleichung abgebildet wird, kann das Fahrerassistenzsystem eine verbrauchs- und komfortoptimierte Regelstrategie anwenden, indem auch mit einer teilweise oder gänzlich geöffneten Kupplung gearbeitet werden kann.

Es ist vorgesehen, dass bei der Anforderung von Kupplungsschlupf eine zwischen einer Schleppmomentverzögerung des Motors und einer im Segelbetrieb bei geöffneter Kupplung gegebenen Segelbetriebsverzögerung liegende Zielverzögerung ohne Ansteuerung eines weiteren Bremssystems des Kraftfahrzeugs erzeugt wird. Hierbei ist es dann möglich, die Kupplung teilweise zu öffnen, so dass eine geregelte Kraftübertragung über den Antriebsstrang angefordert wird, welche es erlaubt, den Bereich möglicher Zielverzögerungen zu erweitern. Der Einsatz weiterer Bremssysteme neben der Motorbremse ist hierfür nicht nötig.

Erfindungsgemäß können ferner vorteilhaft im Rahmen der durch den Kupplungsschlupf erweiterten Regelung der Geschwindigkeit neben einem Betriebsmodus, in dem die Kupplung vollständig geschlossen ist, als weitere Betriebsmodi ein Segelbetrieb, in dem die Kupplung vollständig geöffnet ist und/oder ein Betrieb mit vollständig geöffneter Kupplung und gleichzeitigem Bremseingriff und/oder ein Betrieb mit einer teilweise geöffneten Kupplung, insbesondere bei vorliegendem Antriebsmoment am Motor, verwendet werden. Innerhalb der Fahrstrategie des Fahrerassistenzsystems können mithin weitere Betriebsmodi hinzukommen, die sich mit Hilfe des Kupplungsaktuators zusätzlich realisieren lassen. So ist es denkbar, ein frei rollendes Kraftfahrzeug mit komplett offenem Antriebsstrang (Segelbetrieb) zu realisieren. Liegt das Kraftfahrzeug mit komplett offenem Antriebsstrang vor, ist auch zusätzlich ein Bremseingriff möglich. Schließlich ist es denkbar, das Kraftfahrzeug mit einem Antriebsmoment (beispielsweise automatisch gestellt über einen Leerlaufregler) und einem geregelten Kupplungszustand, also einen zwischen 0 und 100% liegenden Kupplungsschlupf, zu betreiben. Speziell in dem letztgenannten Betriebsmodus ist es möglich, die bisher nicht stellbaren Momentenbereiche und die Übergänge in die Schubabschaltung hinein und aus der Schubabschaltung heraus besser darstellen zu können bzw. diese komfortabel zu gestalten, nachdem eine Art "Bedämpfung" über den Kupplungsschlupf möglich ist. Auf diese Weise lässt sich der Komfort von Wandler-Getrieben auch mit der Kombination eines Kupplungsaktuators mit einem Handschalter-Getriebe abbilden.

Insgesamt führt das erfindungsgemäße Verfahren also dazu, dass der Fahrkomfort innerhalb des Betriebes des Fahrerassistenzsystems steigt. Die Längsregelung ist besser darstellbar, da mehrere Betriebsmodi möglich sind, um dies zu realisieren. Weiterhin ist es möglich, weniger Energieverbrauch zu realisieren, da zum einen bessere verbrauchsoptimierte Fahrerassistenzsystem-Fahrstrategien möglich werden und zum anderen Motor und Bremse weniger häufig im Betrieb angesteuert werden.

Die Erfindung betrifft ferner ein Kraftfahrzeug, umfassend ein Kupplungspedal als Stellmittel zum manuellen Betätigen einer Kupplung, einen als zusätzliches Stellmittel für die Kupplung vorgesehenen Kupplungsaktuator zum Öffnen und Schließen der Kupplung und ein längsführendes Fahrerassistenzsystem, insbesondere ein ACC-System, mit einem zur Durchführung des erfindungsgemäßen Verfahrens ausgebildeten Steuergerät. Durch Verwendung des über das Steuergerät direkt und/oder indirekt ansteuerbaren Kupplungsaktuators ist es mithin möglich, bei der Regelung der Geschwindigkeit auch einen gewünschten Kupplungsschlupf nach dessen Ermittlung zu verwenden, indem der Kupplungsaktuator so angesteuert wird, dass sich der gewünschte Kupplungsschlupf einstellt. Sämtliche Ausführungen bezüglich des erfindungsgemäßen Verfahrens lassen sich analog auf das erfindungsgemäße Kraftfahrzeug übertragen, dass auch hiermit die beschriebenen Vorteile erreicht werden können.

Weitere Vorteile und Einzelheiten der vorliegenden Erfindung ergeben sich aus den im folgenden beschriebenen Ausführungsbeispielen sowie anhand der Zeichnungen. Dabei zeigen:
- Fig. 1: ein erfindungsgemäßes Kraftfahrzeug in einer Prinzipskizze,
- Fig. 2: eine Prinzipskizze von für die Erfindung wesentlichen Komponenten bezüglich des Getriebes, und
- Fig. 3: eine Skizze zur Erläuterung des erfindungsgemäßen Verfahrens.

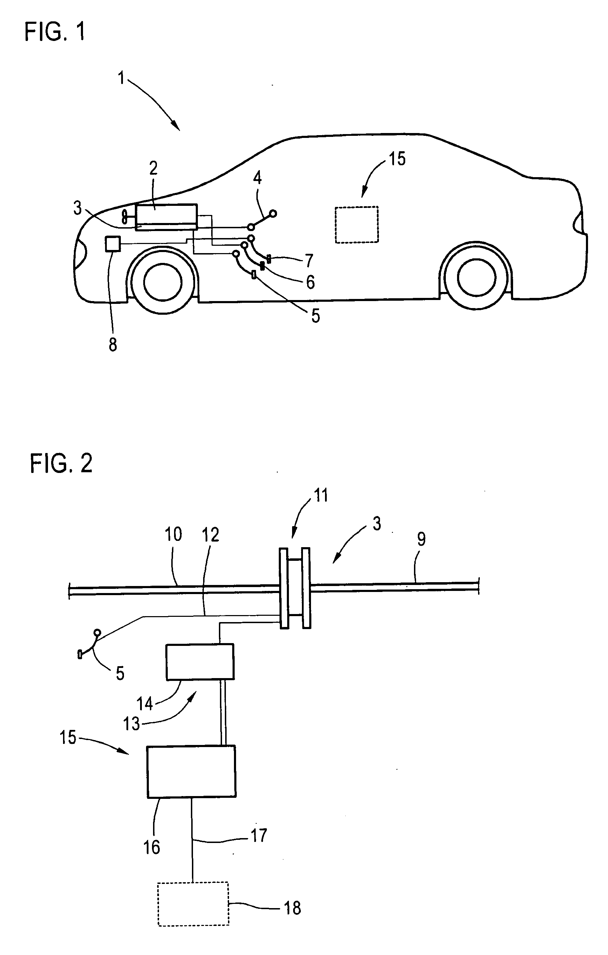

Fig. 1 zeigt eine Prinzipskizze eines erfindungsgemäßen Kraftfahrzeugs 1, welches einen Motor 2 nebst einem Getriebe 3 umfasst, welches über einen Schalthebel 4 vom Fahrer manuell zu schalten ist, wozu das Getriebe entkuppelt werden muss. Hierfür dient, wie grundsätzlich bekannt, ein Kupplungspedal 5, das vom Fahrer zum Öffnen oder Schließen der Kupplung aktiv zu bewegen ist.

Ferner ist ein Gaspedal 6 vorgesehen, welches die Treibstoffzufuhr regelt und mithin ein Wunschantriebsmoment an den Motor 2 vermittelt. Schließlich ist auch ein Bremspedal 7 vorgesehen, welches auf bekannte Weise die Bremsen eines Bremssystems 8 ansteuert.

Fig. 2 zeigt in Form einer Prinzipdarstellung nun wesentliche Komponenten des Kraftfahrzeugs 1. Gezeigt ist das Getriebe 3, das eine Getriebeeingangswelle 9 oder eine Kurbelwelle 10 aufweist, die über eine Kupplung 11 miteinander reversibel kuppelbar und entkuppelbar sind. Hierzu dient, wie bereits beschrieben, zum einen das Kupplungspedal 5, das vom Fahrer aktiv zu betätigen ist. Wird es getreten, so wird die Kupplung 11 bekanntlich geöffnet, wird es wiederum entlastet, so schließt die Kupplung 11. Das Kupplungspedal 5 bildet also ein Stellmittel, welches im vorliegenden Ausführungsbeispiel rein mechanisch auf die Kupplung 11 wirkt, insbesondere über einen in Fig. 2 lediglich angedeuteten Seilzug 12, der unmittelbar an der Kupplung angreift.

Weiterhin ist ein zusätzliches Stellmittel 13, nämlich ein Kupplungsaktuator 14, vorgesehen, der als Stellmotor ausgeführt sein kann und bevorzugt direkt im Getriebe 3 angeordnet ist. Somit kann der Kupplungsaktuator 14 ebenfalls - parallel zu dem Seilzug 12 - unmittelbar auf die Kupplung wirken. Selbstverständlich sind jedoch auch andere Ausgestaltungen der Stellmittel denkbar.

Das Kraftfahrzeug 1 umfasst nun ferner ein in Fig. 1 nur angedeutetes längsführendes Fahrerassistenzsystem 15, hier ein ACC-System (adaptive cruise control). Das Fahrerassistenzsystem 15 umfasst ein Steuergerät 16, über das auch der Kupplungsaktuator 14 ansteuerbar ist. Das Steuergerät 16 ist zur Durchführung des erfindungsgemäßen Verfahrens ausgebildet, mithin zur Ermittlung eines gewünschten Kupplungsschlupfes (Kupplungsschlupfanforderung) parallel zu einer gewünschten Beschleunigungsanforderung (die als negative Beschleunigungsanforderung auch eine Verzögerungsanforderung umfasst). Anhand des ermittelten Kupplungsschlupfes wird der Kupplungsaktuator 14 so angesteuert, dass sich der gewünschte Kupplungsschlupf einstellt.

Das Fahrerassistenzsystem 15 ist über einen hier nur ansatzweise dargestellten Fahrzeugbus 17 mit weiteren Fahrzeugsystemen 18 verbunden, von denen verschiedene Informationen erhalten werden können, insbesondere Umfelddaten, oder an die Anforderungen ausgegeben werden können, beispielsweise die bereits erwähnte Beschleunigungsanforderung, mittels der das Bremssystem 8 und der Motor 2 als weitere Fahrzeugsysteme 18 angesteuert werden können.

Die grundsätzliche Funktion eines längsführenden Fahrerassistenzsystems, das die Geschwindigkeit eines Kraftfahrzeugs regelt, ist im Stand der Technik bereits bekannt und soll hier nicht im Detail dargelegt werden.

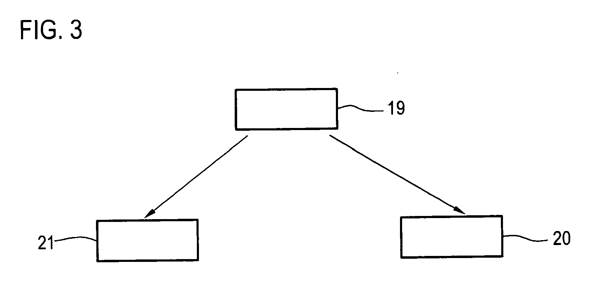

Wie bereits beschrieben, ist das Steuergerät 16 zur Durchführung des erfindungsgemäßen Verfahrens ausgebildet, dessen Prinzip durch Fig. 3 näher erläutert wird. Aus der Funktion 19 des Fahrerassistenzsystems 15, konkret also der Geschwindigkeitsregelung, wird nicht mehr allein die Beschleunigungsanforderung 20 ausgegeben (und gegebenenfalls weitere, aus dem Stand der Technik bekannte Größen), sondern es wird zusätzlich ein Kupplungsschlupf 21 bestimmt, der zwischen 0 und 100% liegen kann, wobei 0% einer vollständig geöffneten Kupplung 11 entspricht, 100% einer vollständig geschlossenen Kupplung 11. Die Funktion 19 ist sich dieser Möglichkeiten bewusst, die in die verwendete Fahrstrategie integriert werden. Vorliegend werden ein auf die Reduzierung des Energieverbrauchs des Kraftfahrzeugs 1 gerichtetes Kriterium und ein auf die Komforterhöhung für den Fahrer abzielendes Kriterium, gegebenenfalls geeignet priorisiert, verwendet.

Die Verwendung des zusätzlichen Freiheitsgrades des Kupplungsschlupfs 21 ermöglicht es, neben einem Betriebsmodus, in dem die Kupplung 11 vollständig geschlossen ist, weitere Betriebsmodi zu eröffnen, die zur Erfüllung von Anforderungen an Komfort und einen geringen Verbrauch genutzt werden können. Als weitere Betriebsmodi stehen hier zur Verfügung:
a) ein Segelbetrieb, in dem die Kupplung 11 vollständig geöffnet ist,
b) ein Betrieb mit vollständig geöffneter Kupplung 11 und gleichzeitigem Bremseingriff über das Bremssystem 8, und
c) ein Betrieb mit einer teilweise geöffneten Kupplung 11 bei vorliegendem Antriebsmoment am Motor 2.

Gerade der genannte Betriebsmodus c) erlaubt es vorteilhafterweise, bislang nicht stellbare Beschleunigungsanforderungen zu erreichen, beispielsweise eine zwischen einer Schleppmomentverzögerung des Motors 2 und einer in Segelbetrieb bei geöffneter Kupplung 11 gegebenen Segelbetriebsverzögerung liegende Zielverzögerung. Es ist möglich, Übergänge in die Schubabschaltung oder aus der Schubabschaltung heraus komfortabler zu gestalten, indem der Kupplungsschlupf 21 bedämpfend wirkt. Die Betriebsmodi a) und b) sind insbesondere auch einer Reduzierung des Energieverbrauchs zuträglich, auch, da insgesamt Motor 2 und Bremssystem 8 weniger häufig angesteuert werden müssen.

Mithin ist es im Rahmen der vorliegenden Erfindung auch bei einem Kraftfahrzeug 1 mit einer grundsätzlich manuell zu schaltenden Kupplung 11 möglich, den Fahrkomfort zu steigern und verbrauchsoptimierte Strategien anzuwenden.

## Patentansprüche

1. Verfahren zum Betrieb eines längsführenden Fahrerassistenzsystems (15), insbesondere eines ACC-Systems, in einem Kraftfahrzeug (1), welches ein Kupplungspedal (5) als Stellmittel zum manuellen Betätigen einer Kupplung (11) aufweist, wobei das Fahrerassistenzsystem (15) zur Durchführung wenigstens eines Fahreingriffs zur Regelung der Geschwindigkeit des Kraftfahrzeugs (1) ausgebildet ist, wobei ein als zusätzliches Stellmittel (13) für die Kupplung (11) vorgesehener Kupplungsaktuator (14) zum automatischen Öffnen und Schließen der Kupplung (11) verwendet wird, wobei bei der Regelung der Geschwindigkeit auch ein gewünschter Kupplungsschlupf ermittelt und der Kupplungsaktuator (14) entsprechend angesteuert wird,
**dadurch gekennzeichnet**,
dass bei der Anforderung von Kupplungsschlupf eine zwischen einer Schleppmomentverzögerung des Motors (2) und einer im Segelbetrieb bei geöffneter Kupplung (11) gegebenen Segelbetriebsverzögerung liegende Zielverzögerung ohne Ansteuerung eines weiteren Bremssystems (8) des Kraftfahrzeugs (1) erzeugt wird.

2. Verfahren nach Anspruch 1,
**dadurch gekennzeichnet**,
dass ein Kupplungsschlupf von 0 bis 100% anforderbar ist.

3. Verfahren nach Anspruch 1 oder 2,
**dadurch gekennzeichnet**,
dass der Kupplungsschlupf in Abhängigkeit von wenigstens einem auf die Reduzierung des Energieverbrauchs des Kraftfahrzeugs (1) und/oder die Komforterhöhung für den Fahrer abzielenden Kriterium ermittelt wird, insbesondere im Rahmen einer Optimierung.

4. Verfahren nach einem der vorangehenden Ansprüche,
**dadurch gekennzeichnet**,
dass im Rahmen der durch den Kupplungsschlupf erweiterten Regelung der Geschwindigkeit neben einem Betriebsmodus, in dem die Kupplung (11) geschlossen ist, als weitere Betriebsmodi ein Segelbetrieb, in dem die Kupplung (11) vollständig geöffnet ist und/oder ein Betrieb mit vollständig geöffneter Kupplung (11) und gleichzeitigem Bremseingriff und/oder ein Betrieb mit einer teilweise geöffneten Kupplung (11), insbesondere bei vorliegendem Antriebsmoment am Motor (2), verwendet werden.

5. Kraftfahrzeug (1), umfassend ein Kupplungspedal (5) als Stellmittel zum manuellen Betätigen einer Kupplung (11), einen als zusätzliches Stellmittel (13) für die Kupplung (11) vorgesehenen Kupplungsaktuator (14) zum Öffnen und Schließen der Kupplung (11) und ein längsführendes Fahrerassistenzsystem (15), insbesondere ein ACC-System, mit einem zur Durchführung eines Verfahrens nach einem der vorangehenden Ansprüche ausgebildeten Steuergerät (16).

## Claims

1. Method for operating a longitudinal guidance driver assistance system (15), in particular an ACC system, in a motor vehicle (1), comprising a clutch pedal (5) as an actuator for manually operating a clutch (11), the driver assistance system (15) being configured to carry out at least one driving intervention for controlling the speed of the motor vehicle (1), a clutch actuator (14) provided as an additional actuator (13) for the clutch (11) being used for automatically disengaging and engaging the clutch (11), the control of the speed also determining a desired clutch slip, and the clutch actuator (14) being correspondingly activated, **characterised in that**, when a clutch slip is required, a target deceleration which is between a drag torque deceleration of the engine (2) and a coasting mode deceleration provided in coasting mode with the clutch (11) disengaged is generated without activating an additional brake system (8) of the motor vehicle (1).

2. Method according to claim 1, **characterised in that** a clutch slip of from 0 % to 100 % can be requested.

3. Method according to either claim 1 or claim 2, **characterised in that** the clutch slip is determined on the basis of at least one criterion aiming to reduce the energy consumption of the motor vehicle (1) and/or to enhance comfort for the driver, in particular within the context of an optimisation.

4. Method according to any of the preceding claims, **characterised in that**, within the context of the speed control extended by the clutch slip, in addition to an operating mode where the clutch (11) is engaged, a coasting mode where the clutch (11) is completely disengaged and/or operation with a fully disengaged clutch (11) and simultaneous brake intervention and/or operation with a clutch (11) disengaged in part, in particular when a drive torque is present at the engine (2), are used as additional operating modes.

5. Motor vehicle (1), comprising a clutch pedal (5) as an actuator for manually operating a clutch (11), a clutch actuator (14) that is provided as an additional actuator (13) for the clutch (11) and is intended for disengaging and engaging the clutch (11) and a longitudinal guidance driver assistance system (15), in particular an ACC system, comprising a controller (16) that is configured to carry out a method according to any of the preceding claims.

## Revendications

1. Procédé de fonctionnement d'un système longitudinal d'assistance au conducteur (15), en particulier un système ACC, dans un véhicule automobile (1), qui présente une pédale d'embrayage (5) comme moyen de réglage pour la commande manuelle d'un embrayage (11), dans lequel le système d'assistance au conducteur (15) est conçu pour assurer au moins une mise en prise de marche permettant de régler la vitesse du véhicule automobile (1), dans lequel on utilise un actionneur d'embrayage (14) prévu comme moyen de réglage supplémentaire (13) pour l'embrayage (11) afin d'ouvrir et de fermer automatiquement l'embrayage (11) et dans lequel, lors du réglage de la vitesse, on détermine également un patinage d'embrayage souhaité et l'actionneur d'embrayage (14) est commandé en conséquence,
**caractérisé en ce que**,
lors de la demande de patinage d'embrayage, il se produit un retard ciblé qui se situe entre le retard du couple d'entraînement du moteur (2) et un retard de fonctionnement à vide établi en fonctionnement à vide en embrayage ouvert (11) sans commande d'un autre système de freinage (8) du véhicule automobile (1).

2. Procédé selon la revendication 1,
**caractérisé en ce que** :
un patinage d'embrayage de 0 à 100 % peut être demandé.

3. Procédé selon la revendication 1 ou la revendication 2,
**caractérisé en ce que** :
le patinage d'embrayage est déterminé en fonction d'au moins un critère visant à la réduction de la consommation d'énergie du véhicule automobile (1) et/ou à l'augmentation du confort du conducteur, en particulier dans le cadre d'une optimisation.

4. Procédé selon l'une quelconque des revendications précédentes,
**caractérisé en ce que**,
dans le cadre du réglage de la vitesse renforcé par le patinage d'embrayage, à côté d'un mode de fonctionnement, dans lequel l'embrayage (11) est fermé, on utilise comme autres modes de fonctionnement un fonctionnement à vide, dans lequel l'embrayage (11) est complètement ouvert et/ou un fonctionnement avec un embrayage (11) complètement ouvert et un engagement simultané du frein et/ou un fonctionnement avec un embrayage (11) en partie ouvert, en particulier lorsqu'un couple d'entraînement est présent sur le moteur (2).

5. Véhicule automobile (1) comprenant une pédale d'embrayage (5) comme moyen de réglage pour la commande manuelle d'un embrayage (11), un actionneur d'embrayage (14) prévu comme moyen de réglage supplémentaire (13) pour l'embrayage (11) afin d'ouvrir et fermer l'embrayage (11) et un système d'assistance au conducteur longitudinal (15), en particulier un système ACC, avec un appareil de commande (16) conçu pour réaliser un procédé selon l'une quelconque des revendications précédentes.
